(19) Europäisches Patentamt
European Patent Office
Office européen des brevets

(11) **EP 2 110 654 A2**

(12) **DEMANDE DE BREVET EUROPEEN**

(43) Date de publication:
**21.10.2009 Bulletin 2009/43**

(51) Int Cl.:
***G01M 11/02*** *(2006.01)*

(21) Numéro de dépôt: **09157925.0**

(22) Date de dépôt: **15.04.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **15.04.2008 FR 0852505**

(71) Demandeurs:
- **COMMISSARIAT A L'ENERGIE ATOMIQUE**
  **75752 Paris Cédex 15 (FR)**
- **Institut National des Sciences Appliquées de Lyon**
  **69621 Villeurbanne (FR)**

(72) Inventeurs:
- **Kopp, Christophe**
  **38120 Fontanil-Cornillon (FR)**
- **Grosse, Philippe**
  **38360 Sassenage (FR)**
- **Orobtchouk, Régis**
  **38490 Fitilieu (FR)**

(74) Mandataire: **de Beaumont, Michel**
  **1bis, rue Champollion**
  **38000 Grenoble (FR)**

(54) **Test non destructif d'un coupleur optique intégré dans un circuit optique intégré**

(57) L'invention concerne un procédé de caractérisation non destructif d'un coupleur optique intégré à éclairement en surface (51) associé à un guide d'ondes optique (53), consistant à mesurer le coefficient de réflexion sur une première surface du coupleur à distance du guide et construire une première courbe, déterminer un premier modèle du coefficient de réflexion sur la première surface, effectuer un premier ajustement paramétrique entre la première courbe et le premier modèle pour déterminer des premiers paramètres, mesurer le coefficient de réflexion ($R_2$) sur une deuxième surface du coupleur proche du guide et construire une deuxième courbe, déterminer un deuxième modèle du coefficient de réflexion ($R_2$) sur la deuxième surface, effectuer un deuxième ajustement paramétrique entre la deuxième courbe et le deuxième modèle pour déterminer des deuxièmes paramètres, et construire la caractéristique de l'efficacité de couplage ($\eta_g$) du coupleur en utilisant les premiers et deuxièmes paramètres.

Fig 6

**Description**

Domaine de l'invention

La présente invention concerne le test de circuits optiques intégrés.
Plus particulièrement, l'invention concerne un procédé de caractérisation et de test non destructif d'un coupleur optique associé à un circuit optique ou optoélectronique intégré.

Exposé de l'art antérieur

Actuellement, les circuits optiques intégrés sont de plus en plus utilisés dans le domaine des télécommunications, notamment pour la transmission, le traitement ou le stockage de données. Les circuits optiques intégrés peuvent avoir de nombreuses fonctions, par exemple de multiplexage, de démultiplexage, de modulation, de démodulation, de routage spectral, d'amplification, d'accumulation, de filtrage, de résonateur...
Les circuits optiques intégrés sont généralement formés sur et dans des plaquettes similaires à celles utilisées en microélectronique. Un circuit optique intégré comprend un ou plusieurs composants optiques élémentaires réalisant un traitement sur un ou plusieurs faisceaux lumineux. Un circuit optique intégré est associé à des coupleurs optiques d'introduction et/ou d'extraction de faisceau lumineux dans des guides d'ondes optiques d'entrée et/ou de sortie.
L'introduction et/ou l'extraction de lumière se fait souvent par la tranche de la puce sur laquelle sont formés les circuits optiques intégrés. Pour tester de tels circuits, il est donc nécessaire de découper chaque puce formée sur une plaquette. Le test est alors réalisé sur chaque puce individuelle en introduisant un faisceau lumineux par la tranche de la puce.
D'autres types de coupleurs ont été proposés, ces coupleurs étant disposés en surface d'une plaquette et étant destinés à recevoir et/ou à renvoyer de la lumière sous une forte incidence (supérieure à 45°) par rapport au plan de la plaquette. Par exemple, ces coupleurs, qui seront appelés ici coupleurs à éclairement en surface, peuvent être constitués d'un réseau de diffraction comprenant une alternance de bandes ayant des coefficients de réflexion différents ou une succession de tranchées formées dans la plaquette. En pratique, le test de circuits comprenant des coupleurs à éclairement en surface est également réalisé sur des puces découpées, comme cela est fait avec les puces à éclairement par la tranche.
De la même façon que dans le cas de plaquettes comprenant des circuits électroniques intégrés, on souhaite tester des circuits optiques intégrés directement sur la plaquette sur laquelle ils sont formés, avant découpe.
Plus particulièrement, il existe un besoin d'un procédé de test d'un coupleur optique à éclairement en surface faisant intervenir uniquement des mesures réalisées à partir d'une seule face de la plaquette.

Résumé de l'invention

Un mode de réalisation de la présente invention prévoit un procédé de caractérisation d'un coupleur optique à éclairement en surface formé sur une plaquette, ce procédé ne nécessitant que des mesures en réflexion sur une face de la plaquette.
Ainsi, un mode de réalisation de la présente invention prévoit un procédé de caractérisation non destructif d'un coupleur optique intégré de type à réseau de diffraction, à éclairement en surface et introduisant de la lumière dans un guide d'ondes optique, consistant à :

effectuer une première mesure du coefficient de réflexion, en fonction de la longueur d'onde, sur une première surface du coupleur située à distance du guide d'ondes optique, pour construire une première courbe ;
déterminer un premier modèle du coefficient de réflexion en fonction de la longueur d'onde sur la première surface, le premier modèle dépendant de premiers paramètres, et effectuer un premier ajustement paramétrique entre la première courbe et le premier modèle de façon à déterminer les premiers paramètres ;
effectuer une deuxième mesure du coefficient de réflexion, en fonction de la longueur d'onde, sur une deuxième surface du coupleur suffisamment proche du guide d'ondes optique pour qu'une portion du faisceau lumineux incident soit introduite dans le guide d'ondes optique, pour construire une deuxième courbe ;
déterminer un deuxième modèle du coefficient de réflexion en fonction de la longueur d'onde sur la deuxième surface, le deuxième modèle dépendant des premiers paramètres et de deuxièmes paramètres, et effectuer un deuxième ajustement paramétrique entre la deuxième courbe et le deuxième modèle de façon à déterminer les deuxièmes paramètres ; et
construire la caractéristique de l'efficacité de couplage du coupleur optique en fonction de la longueur d'onde en utilisant les premiers et deuxièmes paramètres.

Selon un mode de réalisation, les première et deuxième mesures des coefficients de réflexion sont réalisées à l'aide d'un même dispositif de mesure comprenant une première fibre optique fournissant un faisceau lumineux de longueur d'onde donnée sur une surface et une deuxième fibre optique, solidaire de la première, placée de façon à recevoir la lumière provenant de la première fibre optique et se réfléchissant sur la surface, les première et deuxième fibres optiques étant placées symétriquement par rapport à la normale à la surface.

Selon un mode de réalisation, le procédé comprend une étape d'étalonnage du dispositif de mesure dans laquelle le dispositif de mesure est placé de façon à éclairer une surface totalement réfléchissante.

Selon un mode de réalisation, les premier et deuxième ajustements paramétriques sont des ajustements non linéaires de Levenberg Marquardt.

Selon un mode de réalisation, le premier modèle du coefficient de réflexion est de la forme :

$$R_1(\lambda) = \frac{\int\limits_{-\infty}^{+\infty} |r_1(z)|^2 \, dz}{P_{inc}} \, ,$$

où :

$P_{inc}$ est la puissance fournie par la première fibre optique, $r_1(z)$ illustre le profil du faisceau lumineux réfléchi qui a la forme :

$$r_1(z) = \int\limits_{-\infty}^{+\infty} p(k_z) \, r_r(k_z) \exp(ik_z z) \, dk_z \, ,$$

où :

$k_z$ est la constante de propagation dans la direction du guide de l'onde plane considérée,
$p(k_z)$ représente la décomposition en ondes planes du faisceau lumineux gaussien incident, et
$r_r(k_z)$ est le coefficient de réflexion en amplitude de l'onde plane sur le coupleur, qui a la forme :

$$r_r(k_z) = r_0 \frac{k_z - k'_{z,z1}}{k_z - k'_{z,p} - ik''_{z,p}} \, ,$$

où :

$r_0$ et $k'_{z,z1}$, $k'_{z,p}$ et $k''_{z,p}$ sont les premiers paramètres à déterminer.

Selon un mode de réalisation, le deuxième modèle du coefficient de réflexion est de la forme :

$$R_2(\lambda) = \frac{\int\limits_{-\infty}^{+\infty} |r_2(z)|^2 \, dz}{P_{inc}} \, ,$$

où :

$r_2(z)$ désigne le profil du faisceau lumineux réfléchi qui a la forme :

$$r_2(z) = \int_{-\infty}^{0} p(k_z) r_r(k_z) \exp(ik_z z) dk_z + \int_{0}^{+\infty} p(k_z) r_g(k_z) \exp(ik_z z) dk_z \,,$$

où :

$r_g(k_z)$ est le coefficient de réflexion en amplitude de l'onde plane sur le guide d'ondes, qui a la forme, si le guide d'ondes est de type silicium sur isolant :

$$r_g(k_z) = a \cos\left(\frac{2\pi}{\lambda} b + c\right),$$

où :

a, b, et c sont les deuxièmes paramètres à déterminer.

Selon un mode de réalisation, la caractéristique de l'efficacité de couplage du coupleur optique est construite en effectuant les étapes suivante :

déterminer le coefficient de transmission en fonction de la longueur d'onde sur la deuxième surface à partir des premiers et des deuxièmes paramètres ; et
déterminer l'efficacité de couplage du coupleur, qui est égale à 1 moins le coefficient de transmission sur la deuxième surface moins le coefficient de réflexion sur la deuxième surface.

Un mode de réalisation prévoit en outre un procédé de test d'un circuit optique intégré comprenant :

associer au circuit optique au moins un coupleur d'entrée et au moins un coupleur de sortie de type à réseau de diffraction à éclairement en surface ;
caractériser le coupleur d'entrée et/ou le coupleur de sortie par un procédé tel que décrit ci-dessus ; et
mesurer le rapport entre une intensité lumineuse introduite dans le coupleur d'entrée et une intensité lumineuse extraite du coupleur de sortie et en déduire la transmission du circuit optique en prenant en compte les caractéristiques des coupleurs d'entrée et de sortie.

Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :

la figure 1 représente une plaquette sur laquelle sont formées des puces ;
la figure 2 représente un exemple de circuit optique intégré ;
la figure 3 représente un dispositif de mesure du coefficient de réflexion d'une surface selon un mode de réalisation de la présente invention ;
la figure 4 illustre la réalisation d'une première mesure selon un mode de réalisation du procédé de la présente invention ;
la figure 5 représente une courbe de réflexion résultant de la mesure de la figure 4 et la courbe de transmission correspondante ;
la figure 6 illustre la réalisation d'une deuxième mesure selon un mode de réalisation du procédé de la présente invention ;
la figure 7 représente une courbe de réflexion résultant de la mesure de la figure 6 ; et
les figures 8 et 9 illustrent des courbes résultant de traitements numériques selon un mode de réalisation du procédé de la présente invention.

Par souci de clarté, de mêmes éléments ont été désignés par de mêmes références aux différentes figures et, de plus, comme cela est habituel, les diverses figures ne sont pas tracées à l'échelle.

<u>Description détaillée</u>

De façon générale, pour caractériser un circuit optique intégré, on injecte de la lumière sur un coupleur d'entrée, on recueille de la lumière sur un coupleur de sortie et on mesure la transmission en fonction de la longueur d'onde. Les coupleurs d'entrée et/ou de sortie ayant une influence non négligeable, il est souhaitable de les caractériser indépendamment pour isoler les caractéristiques du circuit. On prévoit ici de caractériser les coupleurs in situ sur la plaquette pour tenir compte d'éventuelles variations d'un coupleur à l'autre.

Lorsqu'un faisceau lumineux arrive sur un coupleur à éclairement en surface formé sur une plaquette, il est divisé en une partie réfléchie, en une partie transmise sous le coupleur, et en une partie injectée, par exemple dans un guide d'ondes optique. Pour caractériser la partie injectée dans un guide d'ondes optique par le coupleur, il faut donc a priori mesurer la partie réfléchie sur le coupleur, mesurer la partie transmise en dessous du coupleur, puis calculer la partie injectée en faisant la différence entre le faisceau incident et les faisceaux réfléchis et transmis.

Cependant, lorsque le coupleur est situé sur une plaquette, la mesure de la partie transmise en dessous du coupleur pose plusieurs problèmes. Tout d'abord, l'épaisseur de la plaquette et d'éventuels motifs formés sur ou dans la plaquette introduisent des perturbations sur le faisceau lumineux transmis. Une mesure effectuée sur la face arrière d'une plaquette est donc faussée par ces perturbations. De plus, même si cette mesure s'avérait être de bonne qualité, il n'est pas commode de réaliser des tests sur les faces avant et arrière d'une plaquette. On notera que les bâtis de test classiques en microélectronique ne permettent pas de réaliser des mesures sur la face arrière d'une plaquette.

Un procédé selon un mode de réalisation de la présente invention prévoit donc de caractériser un coupleur optique à éclairement en surface formé sur une plaquette en réalisant uniquement des mesures en réflexion sur la face avant de la plaquette.

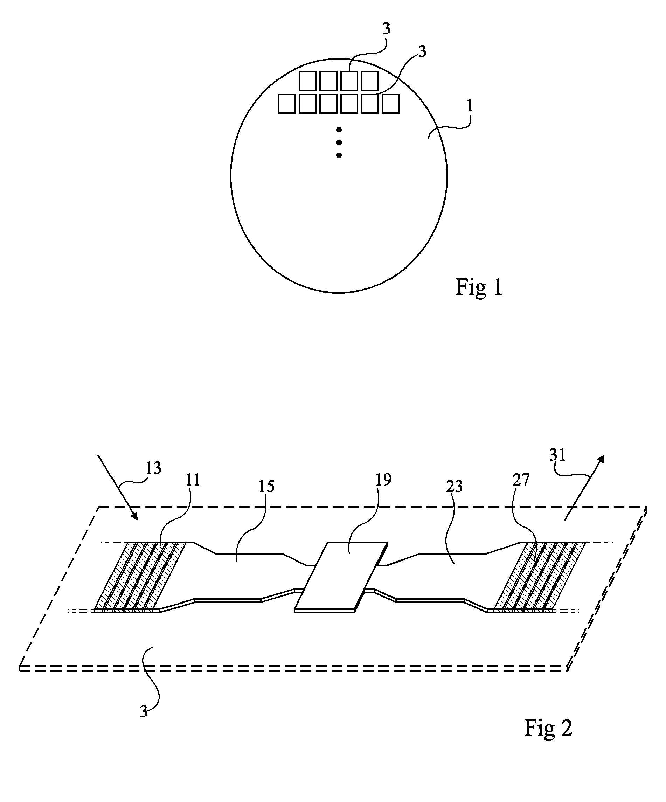

La figure 1 représente une plaquette 1 sur laquelle sont formées plusieurs puces 3. Chaque puce 3 comprend au moins un composant optique intégré et éventuellement, par exemple, des composants électroniques, magnétiques et/ou mécaniques. La plaquette 1 peut être en tout matériau utilisé de façon classique pour former de tels composants, par exemple en un matériau semiconducteur (silicium, SiGe, GaAs...), formé ou non sur une couche isolante. Elle peut également être en verre. Les puces 3 sont généralement identiques.

La figure 2 représente un exemple de circuit optique intégré pouvant être formé sur une puce 3.

Le circuit de la figure 2 comprend un coupleur optique intégré d'entrée 11 de type à réseau de diffraction à éclairement en surface. Le coupleur 11 reçoit un faisceau lumineux incident sur sa surface, représenté en figure 2 par une flèche 13. Le coupleur 11 introduit, sous certaines conditions, une portion du faisceau lumineux 13 dans un guide d'ondes 15. Le guide d'ondes 15 transmet la lumière qu'il reçoit à un circuit optique intégré 19 qui peut avoir toute fonction optique passive ou active. La sortie du circuit optique intégré 19 est fournie à un guide d'ondes optique 23 dont la sortie est reliée à un coupleur de sortie 27. Le coupleur de sortie 27 transforme la lumière arrivant par le guide d'ondes optique 23 en un faisceau lumineux de sortie, schématisé en figure 2 par une flèche 31. A titre d'exemple, le faisceau lumineux 13 peut être amené par une fibre optique et le faisceau lumineux 31 peut être destiné à être transporté par une autre fibre optique. On notera également que l'un au moins des coupleurs 11, 27 pourra avoir une fonction d'entrée/sortie.

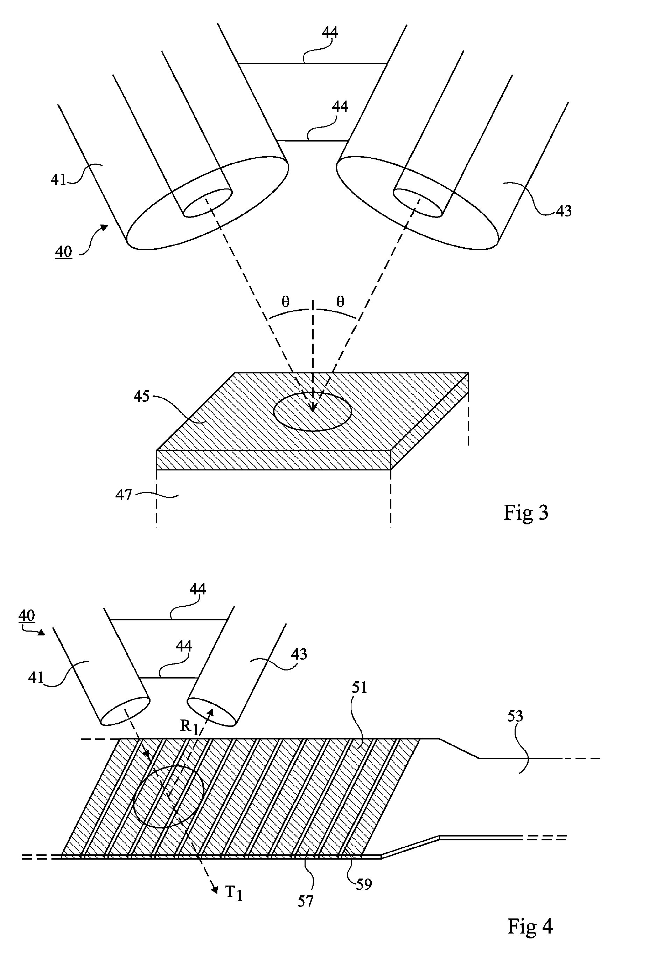

La figure 3 représente un dispositif de mesure selon un mode de réalisation de la présente invention.

Le dispositif de mesure comprend un ensemble solidaire 40 constitué de deux fibres optiques 41 et 43. La liaison entre ces fibres est symbolisée par des traits 44. Par la suite, cet ensemble 40 sera appelé pointe de mesure optique. Les fibres optiques 41 et 43 sont positionnées symétriquement par rapport à un axe vertical et selon une direction formant un angle θ par rapport à cet axe vertical. A titre d'exemple, l'angle θ pourra être de l'ordre de 10 à 20°, par exemple de 14°. La pointe de mesure optique 40 est destinée à être placée en regard d'une surface de façon que la fibre optique 41 fournisse un faisceau lumineux en direction de la surface et que la fibre optique 43 reçoive la lumière réfléchie par la surface.

Pour étalonner une pointe de mesure optique 40, les fibres optiques 41 et 43 sont positionnées par rapport à une surface 45 totalement réfléchissante formée sur un support 47. On mesure alors le rapport entre l'intensité réfléchie et l'intensité incidente sur une plage de longueurs d'onde. Cette mesure permet de connaître, en fonction de la longueur d'onde, le taux de couplage entre les fibres optiques 41 et 43 de la pointe de mesure optique 40. Ce taux de couplage pourra être utilisé ensuite pour normaliser les mesures réalisées à l'aide de la pointe de mesure optique.

Le procédé selon un mode de réalisation prévoit, une fois l'étalonnage effectué, d'utiliser la pointe de mesure optique 40 pour réaliser deux mesures en des points particuliers d'un coupleur. Grâce à ces deux mesures, on détermine un certain nombre de paramètres qui permettent d'obtenir la quantité de lumière introduite par le coupleur dans un guide d'ondes en fonction de la longueur d'onde. Ces mesures seront décrites ci-après en relation avec les figures 4 à 9.

La figure 4 illustre un coupleur à éclairement en surface que l'on veut caractériser, associé à un guide d'ondes optique, et la réalisation d'une première mesure sur ce coupleur.

On considère un coupleur optique 51 à éclairement en surface dont la sortie est reliée à un guide d'ondes optique 53. Le coupleur 51 comprend un réseau de diffraction constitué, par exemple, d'une alternance de premières bandes 57 et de deuxièmes bandes 59 ayant des indices de réflexion différents. Bien entendu, tout type de coupleur optique à réseau à éclairement en surface pourra être caractérisé par le procédé décrit ici.

A titre d'exemple de valeurs numériques, le coupleur peut avoir une largeur d'environ 20 $\mu$m et une longueur d'environ 100 $\mu$m. Le pas du réseau de diffraction peut être égal à environ 0,5 $\mu$m si la longueur d'onde de la lumière à introduire/extraire est de l'ordre de 1 $\mu$m. Le faisceau lumineux fourni par la fibre optique 41 de la pointe de mesure optique 40 pourra alors avoir un diamètre d'environ 10 $\mu$m.

La première mesure est réalisée en plaçant la pointe de mesure optique 40 (fibres optiques 41 et 43) de façon que le faisceau lumineux incident atteigne la surface du coupleur 51 à distance de l'interface entre le coupleur 51 et le guide d'ondes optique 53. Dans cette configuration, aucune lumière n'est introduite dans le guide d'ondes 53. La lumière fournie par la fibre optique 41 se partage donc entre une partie réfléchie sur la surface du coupleur et une partie transmise en dessous du coupleur. En figure 4, la réflexion est illustrée par une flèche $R_1$ qui se dirige vers la fibre optique 43 et la transmission est indiquée par une flèche $T_1$ en alignement avec la direction de la fibre optique 41. On sélectionnera un réseau de diffraction dont le pas est tel qu'il n'existe qu'un seul faisceau diffracté correspondant à l'ordre +1 ou -1 qui permet d'injecter de la lumière dans le guide.

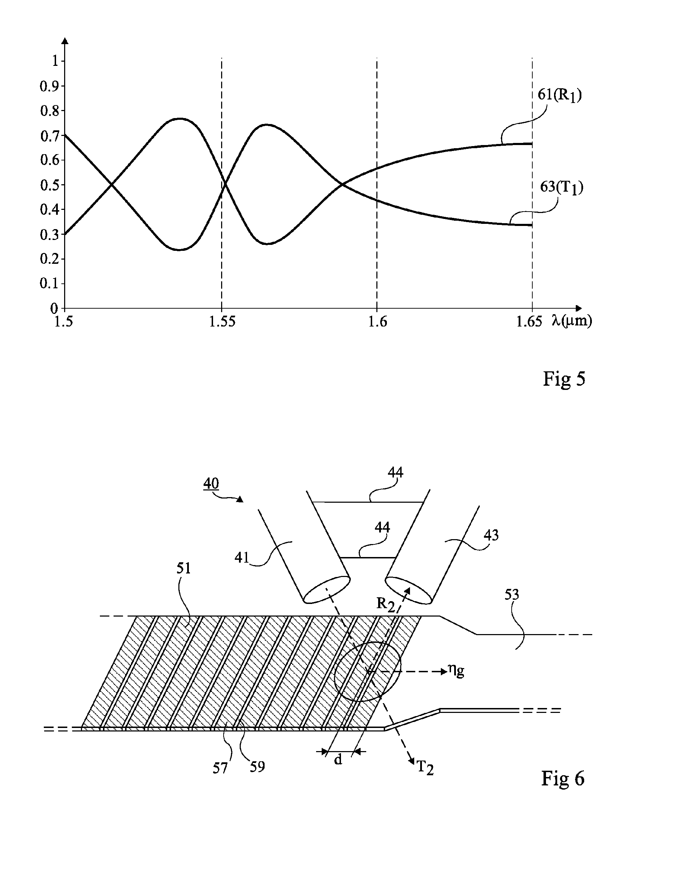

La figure 5 représente une courbe 61 de l'énergie réfléchie $R_1$ résultant de la mesure décrite en relation avec la figure 4, en fonction de la longueur d'onde, dans l'infrarouge proche, entre 1,5 et 1,65 $\mu$m. La courbe 61 présente un maximum de réflexion d'environ 0,78 pour une longueur d'onde de 1,53 $\mu$m et un minimum de réflexion d'environ 0,25 pour une longueur d'onde d'environ 1,57 $\mu$m. Dans les conditions choisies dans lesquelles aucune lumière n'est fournie au guide d'ondes optique 53 par le coupleur 51, la somme $R_1 + T_1$ de l'énergie réfléchie et de l'énergie transmise est égale à 1. On peut donc, à partir de la courbe 61, tracer une courbe 63 de la transmission $T_1$ en fonction de la longueur d'onde, en utilisant l'équation : $T_1 = 1 - R_1$.

Le procédé selon un mode de réalisation propose de modéliser la réflexion dans le cas de la première mesure. Afin d'obtenir la réponse du réseau à un faisceau de forme gaus-sienne, une décomposition en ondes planes du faisceau incident est effectuée, ce qui permet de se ramener au traitement du cas de l'onde plane infinie. La sommation de toutes ces ondes planes permet de décrire le phénomène de couplage dans le cas d'un faisceau d'extension limitée sous une forme intégrale dont la résolution fait appel à des routines de calcul de type transformée de Fourier rapide (FFT). Le coefficient de réflexion théorique est donné par la relation :

$$R_1(\lambda) = \frac{\int\limits_{-\infty}^{+\infty} |r_1(z)|^2 \, dz}{P_{inc}} \ , \qquad\qquad (1)$$

où :

$P_{inc}$ est la puissance fournie par la fibre optique 41 (déterminée lors de l'étape de mesure initiale), et $r_1(z)$ désigne le profil du faisceau lumineux réfléchi qui a, dans cette modélisation, la forme :

$$r_1(z) = \int\limits_{-\infty}^{+\infty} p(k_z) r_r(k_z) \exp(ik_z z) \, dk_z \ , \qquad\qquad (2)$$

où :

$k_z$ est la constante de propagation dans la direction du guide de l'onde plane considérée,
$p(k_z)$ représente la décomposition en ondes planes du faisceau lumineux gaussien incident, et
$r_r(k_z)$ est le coefficient de réflexion en amplitude de l'onde plane sur le coupleur.

Le coefficient de réflexion en amplitude $r_r(k_z)$ peut être mis sous la forme d'une fonction analytique comprenant un zéro, un pôle représentatif du mode guidé et une constante qui correspond au coefficient de réflexion en l'absence du réseau de couplage, soit :

$$r_r\left(k_z\right) = r_0 \frac{k_z - k'_{z,z1}}{k_z - k'_{z,p} - ik''_{z,p}} \ , \qquad\qquad (3)$$

où :

$r_0$ et $k'_{z,z1}$ sont des coefficients à déterminer, et

$k'_{z,p}$ et $k''_{z,p}$ sont, respectivement, les parties réelle et

imaginaire d'un paramètre, $k_{z,p}$, caractérisant l'onde en mode guidé qui se propage sous le réseau de diffraction, ces parties réelle et imaginaire étant à déterminer.

Une méthode d'ajustement paramétrique non linéaire de Levenberg Marquardt permet d'obtenir les valeurs des paramètres $r_0$, $k_{z,p}$ et $k_{z,z1}$ en confrontant le modèle du coefficient de réflexion $R_1$ à la courbe 61.

De la même façon que pour la réflexion, le profil du faisceau lumineux transmis peut être mis sous la forme :

$$t_r\left(k_z\right) = t_0 \frac{k_z - k'_{z,z2}}{k_z - k'_{z,p} - ik''_{z,p}} \ , \qquad\qquad (4)$$

où :

$k'_{z,z2}$ et $t_0$ sont des coefficients à déterminer.

En utilisant le fait que le bilan énergétique est équilibré ($R_1 + T_1 = 1$), on obtient facilement les paramètres $t_0$ et $k'_{z,z2}$.

On notera que les paramètres $t_0$ et $k'_{z,z2}$ peuvent également être obtenus par une méthode d'ajustement paramétrique non linéaire de Levenberg Marquardt en utilisant la courbe 63. Cependant, l'utilisation de l'équilibre du bilan énergétique permet d'obtenir ces paramètres en limitant le nombre de calculs à réaliser.

Ainsi, en utilisant la mesure décrite en relation avec la figure 4, on obtient, par des calculs simples et rapides, une description complète des phénomènes de réflexion et de transmission au niveau de la partie diffractive du coupleur 51.

Dans le rapport quadriennal du laboratoire Charles Fabry de l'Institut d'Optique (rapport 2001-2004, téléchargeable sur le site Internet http://www.institutoptique.fr), il est indiqué que la méthode RCWA (Rigorous Coupled-Wave Analysis) est la méthode la plus utilisée pour l'analyse des réseaux de diffraction. Pour calculer le coefficient de réflexion d'un réseau de diffraction pour une onde plane, cette méthode nécessite la connaissance de paramètres du réseau de diffraction (pas, profondeur de modulation, facteur de remplissage et forme du réseau) et de la structure (indice de réfraction, épaisseur des différentes couches). Dans le cas simple d'un réseau de diffraction réalisé dans une couche guidante déposée sur un substrat, huit paramètres sont à connaître au minimum.

Le procédé décrit ici propose de s'affranchir de la connaissance des paramètres géométriques du réseau en déterminant une fonction analytique qui ne dépend que de quatre paramètres, quelle que soit la structure considérée ($r_0$, $k'_{z,z1}$, $k'_{z,p}$, $k''_{z,p}$). La réduction du nombre de paramètres à déterminer réduit ainsi le temps d'acquisition par deux. De plus, la détermination d'une fonction analytique plutôt que l'utilisation d'une méthode RCWA pour calculer le coefficient de réflexion de l'onde plane de l'équation 2 permet de gagner un facteur 10 sur le temps de calcul.

On a donc pour les raisons ci-dessus une réduction d'un facteur 20 des temps de calcul. En pratique, il s'avère qu'un ajustement paramétrique utilisant un code RCWA dure en général plusieurs heures, alors qu'une procédure d'ajustement utilisant le modèle analytique présenté ici dure moins de trois minutes.

De plus, pour obtenir les paramètres du coefficient de transmission, on travaille directement avec la courbe en onde plane. L'utilisation de la fonction analytique permet ainsi d'inverser directement l'équation 4 et de calculer les paramètres $k'_{z,z2}$ et $t_0$ à partir de 2 points convenablement choisis de la courbe expérimentale (d'où un temps de calcul pour obtenir ces paramètres très faible, inférieur au millième de seconde). Les temps de calcul obtenus grâce à la présente invention sont donc compatibles avec une procédure de test rapide de composants dans un environnement industriel.

La figure 6 illustre la réalisation d'une deuxième mesure selon un mode de réalisation du procédé de la présente invention sur un coupleur tel que celui de la figure 4.

La deuxième mesure est réalisée en plaçant la pointe de mesure optique 40 (fibres optiques 41 et 43) de façon que le faisceau lumineux incident atteigne la surface du coupleur 51 dans la région d'interface entre le coupleur 51 et le guide d'ondes optique 53. Plus précisément, le centre du faisceau lumineux fourni par la fibre optique 41 est situé sur le réseau à une distance d de l'interface avec le guide d'ondes optique 53 légèrement inférieure au diamètre du faisceau lumineux incident. Dans le cas des exemples numériques donnés précédemment, la distance d pourra être de l'ordre de 4 $\mu$m.

Lorsque l'on positionne la pointe de mesure optique de la façon décrite ci-dessus, le faisceau lumineux incident fourni par la fibre optique 41 se divise en :

une portion qui est réfléchie vers la fibre optique 43 (flèche $R_2$),
une portion qui est transmise en dessous du coupleur (flèche $T_2$), et
une portion qui est introduite dans le guide d'ondes optique 53 (flèche $\eta_g$).

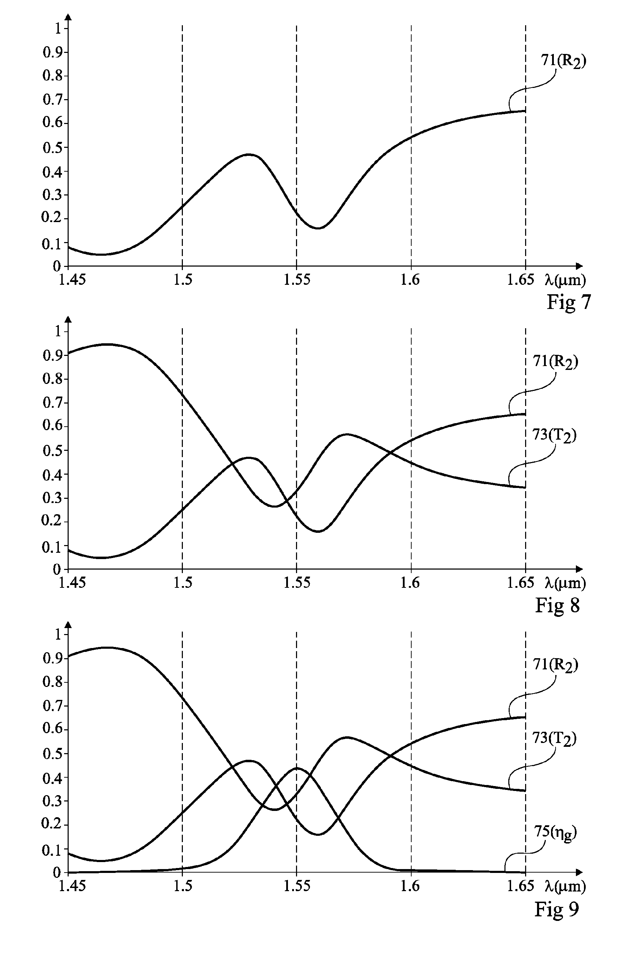

La figure 7 représente une courbe 71 de l'énergie réfléchie $R_2$ résultant de la mesure décrite en relation avec la figure 6, en fonction de la longueur d'onde, dans l'infrarouge proche. La courbe 71 présente un maximum de réflexion d'environ 0,47 à une longueur d'onde d'environ 1,53 $\mu$m et un minimum de réflexion d'environ 0,16 à une longueur d'environ 1,56 $\mu$m.

Le procédé décrit propose de modéliser la réflexion dans le cas de la deuxième mesure. De la même façon que pour la modélisation de la première mesure, on décompose le faisceau incident en ondes planes. Le coefficient de réflexion théorique est donné par la relation :

$$R_2(\lambda) = \frac{\int\limits_{-\infty}^{+\infty} |r_2(z)|^2 \, dz}{P_{inc}} \; . \qquad (1')$$

Le profil du faisceau réfléchi $r_2(z)$ dépend de la somme de deux intégrales, la première représentant la portion du faisceau lumineux qui est réfléchie sur le coupleur optique 51 et la deuxième représentant la portion du faisceau lumineux qui est réfléchie sur le guide d'ondes optique 53. En considérant que le bord du coupleur, c'est-à-dire la séparation entre le coupleur 51 et le guide d'ondes 53, se trouve à l'abscisse z = 0, le profil du faisceau lumineux réfléchi $r_2(z)$ a la forme :

$$r_2(z) = \int\limits_{-\infty}^{0} p(k_z) r_r(k_z) \exp(ik_z z) dk_z + \int\limits_{0}^{+\infty} p(k_z) r_g(k_z) \exp(ik_z z) dk_z , \qquad (5)$$

où :

$k_z$ est la constante de propagation dans la direction du guide de l'onde plane considérée,
$p(k_z)$ représente la décomposition en ondes planes du faisceau lumineux gaussien incident,
$r_r(k_z)$ est le coefficient de réflexion en amplitude de l'onde plane sur le coupleur, et
$r_g(k_z)$ est le coefficient de réflexion en amplitude de l'onde plane sur le guide d'onde qui est à déterminer.

Grâce à la première mesure de la figure 4 et aux calculs effectués en relation avec cette mesure, le coefficient de réflexion en amplitude de l'onde plane sur le coupleur $r_r(k_z)$ est connu.

En fonction du type de guide d'ondes 53 utilisé, on peut modéliser le coefficient de réflexion en amplitude sur le guide d'ondes $r_g(k_z)$. Par exemple, dans le cas d'un guide d'ondes de type silicium sur isolant, le coefficient de réflexion en amplitude $r_g(k_z)$ sur le guide d'ondes a la forme :

$$r_g(k_z) = a \cos\left(\frac{2\pi}{\lambda} b + c\right), \qquad (6)$$

où :

a, b, et c sont des paramètres à déterminer.

Une méthode d'ajustement paramétrique non linéaire de Levenberg Marquardt permet d'obtenir les valeurs des paramètres a, b et c en confrontant le modèle du coefficient de réflexion $R_2$ à la courbe 71. Grâce à cet ajustement paramétrique non linéaire, on obtient également une valeur de la distance d, ce paramètre intervenant dans l'expression de la décomposition en ondes planes du faisceau lumineux gaussien incident $p(k_z)$.

Quel que soit le type de guide d'ondes utilisé, son coefficient de réflexion en amplitude peut être modélisé en fonction de paramètres que l'on détermine ensuite par ajustement paramétrique.

De la même façon, le profil du faisceau lumineux transmis a la forme :

$$t_2(z) = \int_{-\infty}^{0} p(k_z)t_r(k_z)\exp(ik_z z)dk_z + \int_{0}^{+\infty} p(k_z)t_g(k_z)\exp(ik_z z)dk_z , \quad (7)$$

où :

$t_r(k_z)$ est le coefficient de transmission en amplitude sur le coupleur, et
$t_g(k_z)$ est le coefficient de transmission en amplitude sur le guide d'ondes qui est à déterminer.

Grâce à la première mesure de la figure 4 et aux calculs effectués en relation avec cette mesure, la fonction $t_r(k_z)$ est connue.

Le coefficient de réflexion en amplitude sur le guide d'ondes étant connu, on peut calculer le coefficient de transmission en amplitude sur le guide d'ondes en utilisant la relation :

$$t_g(k_z) = \sqrt{1 - r_g^2(k_z)} . \quad (8)$$

Ainsi, en utilisant la formule (7), on obtient une expression analytique du profil du faisceau lumineux transmis $t_2(z)$. On peut alors calculer le coefficient de transmission $T_2$ en utilisant la formule :

$$T_2(\lambda) = \frac{\int_{-\infty}^{+\infty} |t_2(z)|^2 dz}{P_{inc}} . \quad (9)$$

Les figures 8 et 9 représentent des courbes résultant des traitements numériques du procédé selon un mode de réalisation de la présente invention. La figure 8 reprend la courbe 71 et représente également une courbe 73 du coefficient de transmission $T_2$ obtenue par les calculs décrits précédemment.

Dans le cas de la deuxième mesure, l'équilibre du système donne : $R_2 + T_2 + \eta_g = 1$, $\eta_g$ étant l'efficacité de couplage du coupleur dans le guide d'ondes. Les étapes précédentes ayant permis de connaître $R_2$ et $T_2$, on peut donc facilement déterminer l'efficacité de couplage $\eta_g$ du coupleur 51.

La figure 9 reprend les courbes 71 et 73 et représente également une courbe 75 de l'efficacité de couplage $\eta_g$ du coupleur.

L'efficacité de couplage $\eta_g$ du coupleur dans le guide d'ondes est donc déterminée par une méthode d'extraction de paramètres qui ne nécessite que deux mesures de coefficient de réflexion sur le coupleur. Le procédé décrit permet donc de caractériser un coupleur optique rapidement et directement sur une plaquette, avant découpe de la plaquette, et en n'effectuant que des mesures de réflexion sur une face de la plaquette.

Ainsi, on peut tester un circuit optique intégré associé à des coupleurs d'entrée et/ou de sortie à éclairement en surface en effectuant les étapes suivantes :

caractériser le ou les coupleurs d'entrée du circuit optique ;

caractériser le ou les coupleurs de sortie du circuit optique ;

mesurer le rapport entre une intensité lumineuse introduite dans le coupleur d'entrée et une intensité lumineuse extraite du coupleur de sortie ; et

déduire la transmission du circuit optique en prenant en compte les caractéristiques des coupleurs d'entrée et de sortie.

On pourra également prévoir le test d'un circuit optique intégré à éclairement par la tranche à l'aide du procédé de caractérisation présenté ici. Dans ce cas, on place un coupleur d'entrée et un coupleur de sortie à éclairement en surface sur le support du circuit à tester. Les coupleurs d'entrée et de sortie sont connectés, respectivement, en entrée et en sortie du circuit, en parallèle des systèmes de transport de lumière utilisés lors du fonctionnement normal. Les coupleurs d'entrée et de sortie sont ensuite caractérisés en suivant le procédé décrit ici et on teste ainsi le circuit optique. Les coupleurs d'entrée et de sortie ajoutés pour le test pourront être formés dans une zone de découpe de la tranche dans laquelle les circuits sont formés.

## Revendications

1. Procédé de caractérisation non destructif d'un coupleur optique intégré de type à réseau de diffraction (51), à éclairement en surface et introduisant de la lumière dans un guide d'ondes optique (53), consistant à :

   effectuer une première mesure du coefficient de réflexion ($R_1$), en fonction de la longueur d'onde, sur une première surface du coupleur située à distance du guide d'ondes optique, pour construire une première courbe (61) ;

   déterminer un premier modèle du coefficient de réflexion ($R_1$) en fonction de la longueur d'onde sur la première surface, le premier modèle dépendant de premiers paramètres ($r_0$, $k'_{z,p}$, $k''_{z,p}$, $k'_{z,z1}$), et effectuer un premier ajustement paramétrique entre la première courbe et le premier modèle de façon à déterminer les premiers paramètres ;

   effectuer une deuxième mesure du coefficient de réflexion ($R_2$), en fonction de la longueur d'onde, sur une deuxième surface du coupleur suffisamment proche du guide d'ondes optique pour qu'une portion du faisceau lumineux incident soit introduite dans le guide d'ondes optique, pour construire une deuxième courbe (71) ;

   déterminer un deuxième modèle du coefficient de réflexion ($R_2$) en fonction de la longueur d'onde sur la deuxième surface, le deuxième modèle dépendant des premiers paramètres et de deuxièmes paramètres (a, b, c), et effectuer un deuxième ajustement paramétrique entre la deuxième courbe et le deuxième modèle de façon à déterminer les deuxièmes paramètres ; et

   construire la caractéristique de l'efficacité de couplage ($\eta_g$) du coupleur optique en fonction de la longueur d'onde en utilisant les premiers et deuxièmes paramètres.

2. Procédé selon la revendication 1, dans lequel les première et deuxième mesures de coefficients de réflexion sont réalisées à l'aide d'un même dispositif de mesure (40) comprenant une première fibre optique (41) fournissant un faisceau lumineux de longueur d'onde donnée sur une surface et une deuxième fibre optique (43), solidaire de la première, placée de façon à recevoir la lumière provenant de la première fibre optique et se réfléchissant sur la surface, les première et deuxième fibres optiques étant placées symétriquement par rapport à la normale à la surface.

3. Procédé selon la revendication 2, comprenant une étape d'étalonnage du dispositif de mesure (40) dans laquelle le dispositif de mesure est placé de façon à éclairer une surface totalement réfléchissante.

4. Procédé selon l'une quelconque des revendications précédentes, dans lequel les premier et deuxième ajustements paramétriques sont des ajustements non linéaires de Levenberg Marquardt.

5. Procédé selon l'une quelconque des revendications 2 à 4, dans lequel le premier modèle du coefficient de réflexion ($R_1$) est de la forme :

$$R_1(\lambda) = \frac{\int\limits_{-\infty}^{+\infty} |r_1(z)|^2\, dz}{P_{inc}}\ ,$$

où :

$P_{inc}$ est la puissance fournie par la première fibre optique (41),
$r_1(z)$ illustre le profil du faisceau lumineux réfléchi qui a la forme :

$$r_1(z) = \int\limits_{-\infty}^{+\infty} p(k_z)\, r_r(k_z) \exp(ik_z z)\, dk_z\ ,$$

où :

$k_z$ est la constante de propagation dans la direction du guide de l'onde plane considérée,
$p(k_z)$ représente la décomposition en ondes planes du faisceau lumineux gaussien incident, et
$r_r(k_z)$ est le coefficient de réflexion en amplitude de l'onde plane sur le coupleur, qui a la forme :

$$r_r(k_z) = r_0\, \frac{k_z - k'_{z,z1}}{k_z - k'_{z,p} - ik''_{z,p}}\ ,$$

où :

$r_0$ et $k'_{z,z1}$, $k'_{z,p}$ et $k''_{z,p}$ sont les premiers paramètres à déterminer.

**6.** Procédé selon la revendication 5, dans lequel le deuxième modèle du coefficient de réflexion ($R_2$) est de la forme :

$$R_2(\lambda) = \frac{\int\limits_{-\infty}^{+\infty} |r_2(z)|^2\, dz}{P_{inc}}\ ,$$

où :

$r_2(z)$ désigne le profil du faisceau lumineux réfléchi qui a la forme :

$$r_2(z) = \int\limits_{-\infty}^{0} p(k_z)\, r_r(k_z) \exp(ik_z z)\, dk_z + \int\limits_{0}^{+\infty} p(k_z)\, r_g(k_z) \exp(ik_z z)\, dk_z\ ,$$

où :

$r_g(k_z)$ est le coefficient de réflexion en amplitude de l'onde plane sur le guide d'ondes, qui a la forme, si le guide d'ondes est de type silicium sur isolant :

$$r_g\left(k_z\right) = a\cos\left(\frac{2\pi}{\lambda}b + c\right),$$

où :

a, b, et c sont les deuxièmes paramètres à déterminer.

7. Procédé selon l'une quelconque des revendications précédentes, dans lequel la caractéristique de l'efficacité de couplage ($\eta_g$) du coupleur optique est construite en effectuant les étapes suivante :

déterminer le coefficient de transmission ($T_2$), en fonction de la longueur d'onde, sur la deuxième surface à partir des premiers et des deuxièmes paramètres ; et
déterminer l'efficacité de couplage du coupleur, qui est égale à 1 moins le coefficient de transmission ($T_2$) sur la deuxième surface moins le coefficient de réflexion ($R_2$) sur la deuxième surface.

8. Procédé de test d'un circuit optique intégré comprenant :

associer au circuit optique au moins un coupleur d'entrée et au moins un coupleur de sortie de type à réseau de diffraction à éclairement en surface ;
caractériser le coupleur d'entrée et/ou le coupleur de sortie par un procédé selon l'une quelconque des revendications précédentes ; et
mesurer le rapport entre une intensité lumineuse introduite dans le coupleur d'entrée et une intensité lumineuse extraite du coupleur de sortie et en déduire la transmission du circuit optique en prenant en compte les caractéristiques des coupleurs d'entrée et de sortie.

3

3

1

Fig 1

13

11    15    19    23    27    31

3

Fig 2

Fig 3

Fig 4

Fig 5

Fig 6

Fig 7

Fig 8

Fig 9